# EUROPEAN PATENT SPECIFICATION

(11) **EP 1 295 505 B1**
(45) Date of publication and mention of the grant of the patent: **20.10.2010**
(21) Application number: 00948234.0
(22) Date of filing: 26.07.2000
(51) Int. Cl.: H04Q 11/04

(54) **REROUTING IN A MULTIPROTOCOL LABEL SWITCHING (MPLS) DOMAIN**
LEITWEGUMLENKUNG IN EINEM MPLS BEREICH
REROUTAGE DANS UN DOMAINE A COMMUTATION D'ETIQUETTE MULTIPROTOCOLE (MPLS)

(30) Priority: 29.06.2000 IL 13708200
(43) Date of publication of application: 26.03.2003
(73) Proprietor: ECI Telecom Ltd., Petach-Tikva 49517 (IL)
(72) Inventor: SOURANI, Sason, 45267 Hod Hasharon (IL)
(74) Representative: Farago, Peter Andreas
(86) International application number: PCT/IL2000/000446
(87) International publication number: WO 2002/001909

(56) References cited:
- EP-A- 0 961 518
- VEITCH P ET AL: "ATM NETWROK RESILIENCE" IEEE NETWORK: THE MAGAZINE OF COMPUTER COMMUNICATIONS,US,IEEE INC. NEW YORK, vol. 11, no. 5, 1 September 1997 (1997-09-01), pages 26-33, XP000699938 ISSN: 0890-8044
- SWALLOW GEORGE: "MPLS Advantages for Traffic Engineering" IEEE COMMUNICATIONS MAGAZINE, 1 December 1999 (1999-12-01), pages 54-57, XP002153023
- ANDERSON J ET AL: "VIRTUAL PATH GROUP PROTECTION SWITCHING - A METHOD FOR FAST ATM NETWORK SURVIVABILITY" BELL LABS TECHNICAL JOURNAL,US,BELL LABORATORIES, vol. 2, no. 2, 21 March 1997 (1997-03-21), pages 213-232, XP000695177 ISSN: 1089-7089
- DOVERSPIKE ROBERT D. ET AL: "Future transport network architectures" IEEE COMMUNICATIONS MAGAZINE, 1 August 1999 (1999-08-01), XP002153024

## Description

### Field of the Invention

The invention relates to the forwarding of a data packet within a Multiprotocol Label Switching (MPLS) domain.

### Background of the Invention

Multiprotocol Label Switching (MPLS) is an evolving IETF standard based on the concept of label switching for the forwarding of data packets along a predetermined Label Switched Path (LSP) established between two endpoint network elements. A recent IETF Internet Draft entitled *"*A Method For Setting An Alternative Label Switched Paths to Handle Fast Reroute" by D. Haskin et al, published May 2000, (hereinafter referred to as the Draft) proposes the establishment of a backup LSP between the endpoint network elements of a protected LSP to overcome traffic problem along the protected LSP.

Veitch P et al in "ATM Network Resilience", IEEE Network, The Magazine of Computer Communications (1997-09-01) describes a method for carrying out protection in an ATM network. The solution described by this publication is that upon detecting a fault, a selector initiates a changeover whereby the ATM cell that arrives to the selector is provided with a new VPI/VCI that replaces its original VPI/VCI, where this new VPI/VCI is compatible to the protection route along which the cell will be routed for the remaining of its path.

G. Swallow in "MPLS Advantages for Traffic Engineering", IEEE Communications Magazine (1999-12-01) describes a method whereby upon detecting a fault at a protected link, all paths using this link as one of their intermediate links are notified of the fault occurred so that the traffic can reach its final destination along a corresponding protection tunnel.

### Summary of the Invention

The present invention provides for a method as recited in claim 1, for a telecommunication network as recited in claim 4 and for a network element as recited in claim 8.

Generally speaking, the present invention is based on the notion that a congested or inoperative link between a pair of neighboring network elements of a label switched path, or a congested or inoperative network element itself, is a local problem which can be solved by a local "*fix*", namely, a so-called Backup Path Segment (BPS) without the trouble of having to define an entirely new LSP as proposed in the above mentioned Draft. In a sense, an BPS can be considered to be an intra MPLS domain Label Switched Path (LSP) in that it has source and destination network elements comparable to an LSP's ingress and egress network elements, the difference being that an BPS is selectively invoked at its source network element and terminates at its destination network element whereupon a data packet rerouted along the BPS proceeds along the original LSP ostensibly as if the data packet had arrived at the destination network element from its neighboring downstream network element. The present invention is particular advantageous in that it enables the convenient adding or modification to BPSs to LSPs as the need may arise, for example, in response to a modification in a network's topology. Similarly, the present invention enables the subsequent removal of redundant BSPs in a convenient fashion. Against that, once an BPS has been invoked, the forwarding of a data packet along an LSP via an BPS may not necessarily be an optimal route from the LSP's ingress network element to its egress network element in terms of a metric such as shortest route, least cost path, and the like. Along these lines, application of the present invention may even involve the sending of a data packet backwards and forwards along the same link in particular network topologies.

### Brief Description of the Drawings

In order to understand the invention and to see how it can be carried out in practice, preferred embodiments will now be described, by way of non-limiting examples only, with reference to the accompanying drawings, in which similar parts are likewise numbered, and in which:
Fig. 1A is a pictorial representation showing the forwarding of a data packet along a Label Switched Path (LSP) within an MPLS domain employing a global label scheme, and the rerouting of the data packet along a Backup Path Segment (BPS) around a protected link path segment of the LSP in accordance with the present invention;
Fig. 1B shows the label switching tables of the network elements involved in the forwarding of the data packet along the LSP and the BPS of Figure 1A;
Fig. 2A is a pictorial representation showing the rerouting of the data packet along a Backup Path Segment (BPS) around a protected intermediate network element path segment of the LSP of Figure 1A in accordance with the present invention;
Fig. 2B shows the label switching tables of the network elements involved in the forwarding of the data packet along the LSP and the BPS of Figure 2A;
Fig. 3A is a pictorial representation showing the forwarding of a data packet along a label switched path (LSP) within an MPLS domain employing a local label scheme, and the rerouting of the data packet along a Backup Path Segment (BPS) around a protected link path segment of the LSP in accordance with the present invention;
Fig. 3B shows the label switching tables of the network elements involved in the forwarding of the data packet along the LSP and the BPS of Figure 3A;
Fig. 4A is a pictorial representation showing the rerouting of the data packet along a Backup Path Segment (BPS) around a protected intermediate network element path segment of the LSP of Figure 3A in accordance with the present invention; and
Fig. 4B shows the label switching tables of the network elements involved in the forwarding of the data packet along the LSP and the BPS of Figure 4A.

### Detailed Description of the Drawings

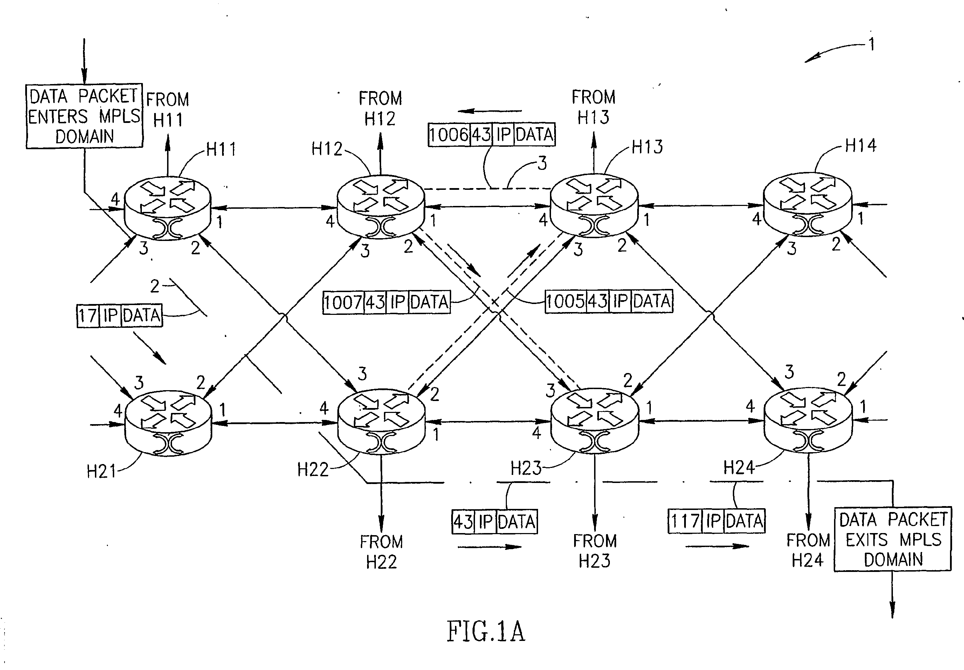

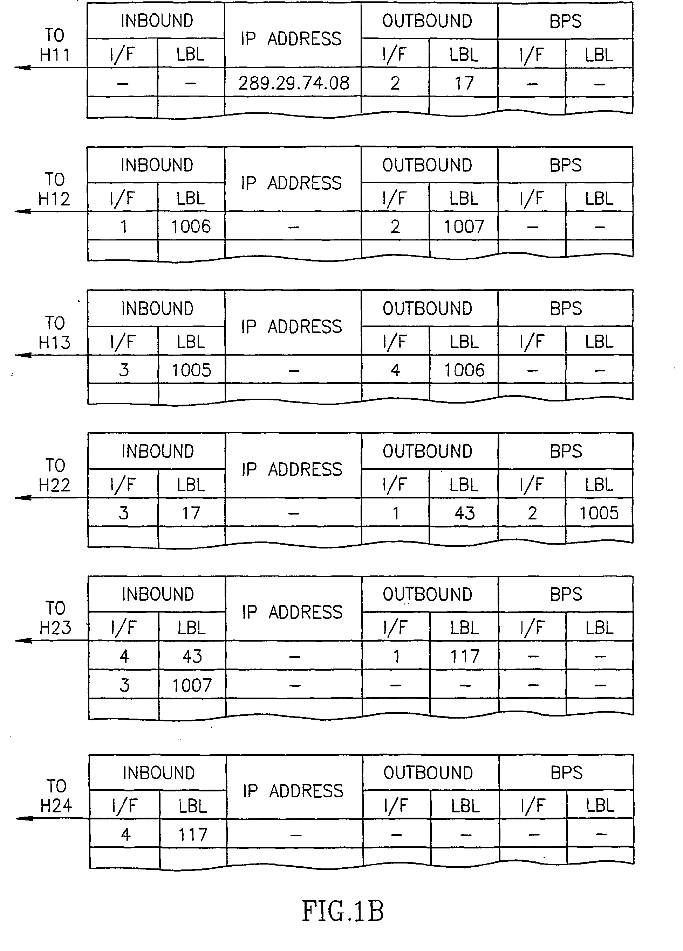

Figure 1A shows a regular partial mesh MPLS domain 1 including network elements H11, H12, H13, H14, H21, H22, H23 and H24 which is capable of supporting one or more Label Switched Paths (LSPs) for forwarding data packets between any two distinct endpoint network elements, possibly via one or more core network elements. Each pair of neighboring network elements in an upstream direction along an LSP starting at its ingress network element can also double respectively as the source and destination network elements of a Backup Path Segment protecting the link between its network elements. Each network element has a label switching table (LST) enabling the establishment of an LSP, and one or more BSPs associated therewith, if any. Each LST is divided into four columns, namely, an IP Address column specifying IP address values, and three columns each specifying interface (I/F) and label (LBL) values, namely, an Inbound column, an Outbound Column, and a Backup Path Segment (BPS) column. The MPLS domain 1 employs a so-called global label scheme for the forwarding of data packets, namely, each outbound label employed for forwarding a data packet along a link between a pair of neighboring network elements is unique within the MPLS domain.

Figure 1A shows an exemplary LSP 2 (dot dash line) constituted by an ingress network element H11, two core network elements H22 and H23, and an egress network element H24. The LSP 2 has a single backup path segment BPS 3 (dash line) for bypassing the H22-H23 protected link path segment, the BPS 3 being constituted by source network element H22, core network element H13, core network element H12, and destination network element H23. It should be noted that an alternate BPS for the H22-H23 protected link path segment could be via core network elements H13 and H14 whilst the LSP 2 could be provided with additional BPSs for rerouting around two other possible protected link path segments, namely, the H11-H21 link, and the H23-H24 link.

The LSP 2 is allocated MPLS LBL 17 for forwarding a data packet from network element H11 along interface I/F 2 to network element H22, MPLS LBL 43 for forwarding a data packet from network element H22 along interface I/F 1 to network element H23, and MPLS LBL 117 for forwarding a data packet from network element H23 along interface I/F 1 to network element H24. The BPS 3 is allocated MPLS LBL 1005 for forwarding a data packet from network element H22 along interface I/F 2 to network element H13, MPLS LBL 1006 for forwarding a data packet from network element H13 along interface I/F 4 to network element H12, and MPLS LBL 1007 for forwarding a data packet from network element H12 along interface I/F 2 to network element H23.

Propagation of a data packet having an IP destination address 289.29.74.08 along the LSP 2 via BSP 3 is as follows:
The data packet arrives at network element H11 where its IP destination address is matched with LSP 2. Network element H11 encapsulates the data packet with an MPLS header having an MPLS label 17 before forwarding the encapsulated data packet to network element H22 via the interface I/F 2. The data packet arrives at network element H22 at which the BPS 3 has been invoked, for example, due to congestion along the H22-H23 link. The network element H22 switches the MPLS label 17 with the MPLS label 43 and then pushes on an additional MPLS label 1005 onto the MPLS label 43 before forwarding the rerouted data packet to network element H13 via the interface I/F 2. The rerouted data packet arrives at network element H13 which switches the uppermost MPLS label 1005 with the MPLS label 1006 before forwarding the rerouted data packet to network element H12 via the interface I/F 4. The network element H12 switches the uppermost MPLS label 1006 with the MPLS label 1007 before forwarding the rerouted data packet to network element H23 via the interface I/F 2. The rerouted data packet arrives at network element H23 which pops off the last-in uppermost MPLS label 1007 from the rerouted data packet's MPLS header to reveal the last but one MPLS label 43 of the BPS's source network element H22. The network element H23 then switches the now uppermost MPLS label 43 with the MPLS label 117 before forwarding the now back on track data packet to network element H24 via the interface I/F 1. The now back on track data packet arrives at network element H24 which pops off the uppermost MPLS label 117 from the data packet's MPLS header to reveal the IP destination address 289.29.74.08 whereupon the network element H24 forwards the data packet to this address.

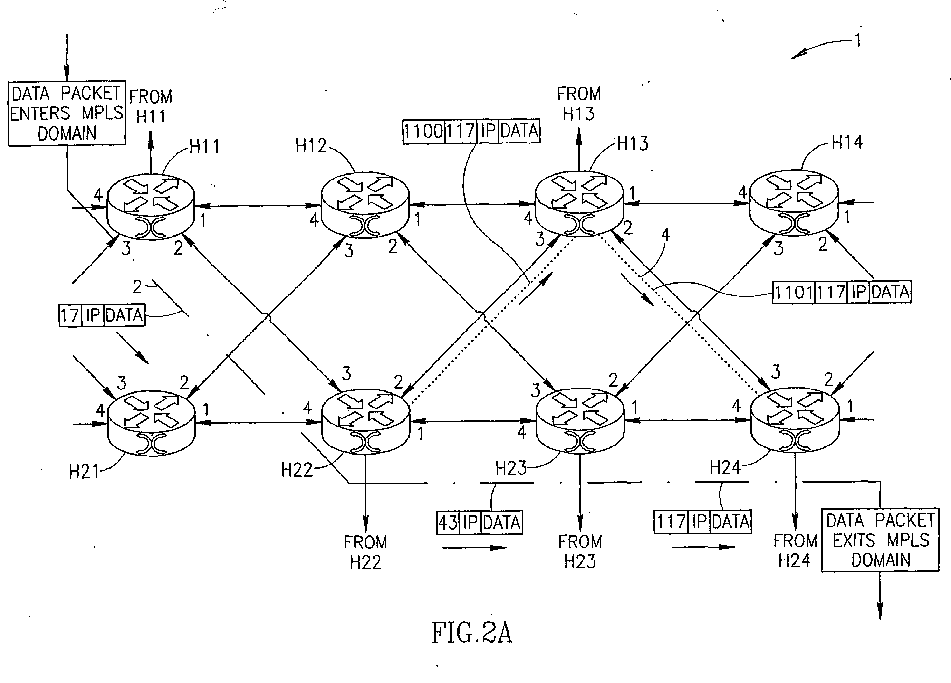

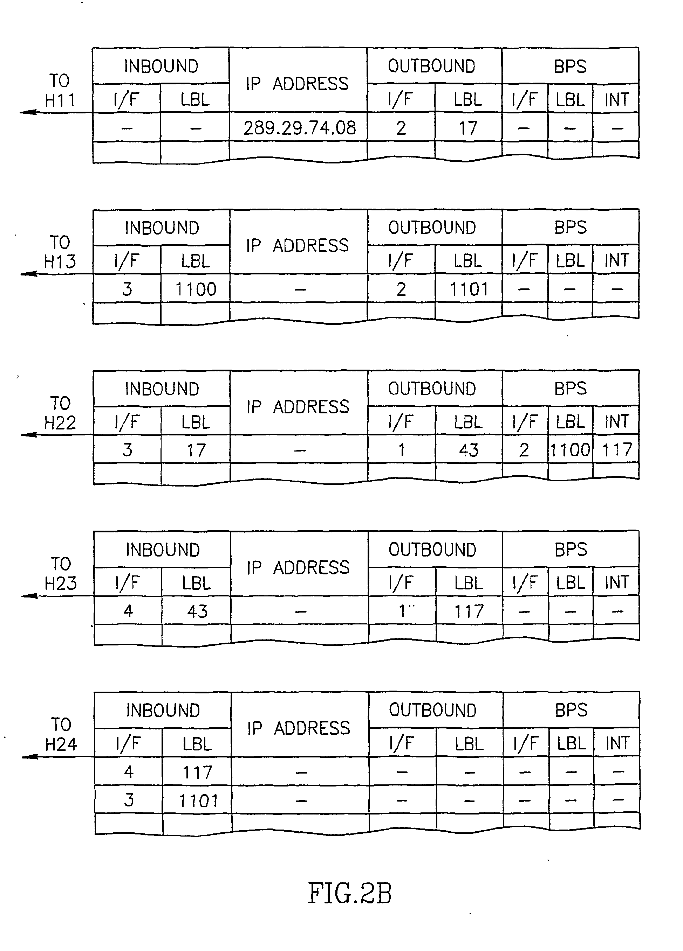

The protection of the H22-H23 link can alternatively be achieved by way of an BPS 4 bypassing a protected intermediate network element path segments between network element H11 and network element H23 (see Figure 2). Alternatively, the H22-H23 link can be protected by an BPS bypassing a protected intermediate network element path segment between network element H22 and network element H24. The manner of rerouting a data packet along BPS 4 is similar to the manner of rerouting around BPS 3, the difference being that the rerouted data packet's MPLS header must necessarily include the MPLS LBL of the intermediate network element H23 between the source network element H22 and the destination network element H24 as opposed to that of the source network element H22 in the case of BPS 3. To this end, each network element's LST includes an additional INT sub-column under its BPS column which stores these values which are pushed onto the MPLS stack of a data packet's MPLS header at a source network element on invoking an BPS thereat. Thus, in the case of BPS 4, the data packet propagates therealong with the stacked MPLS label 117.

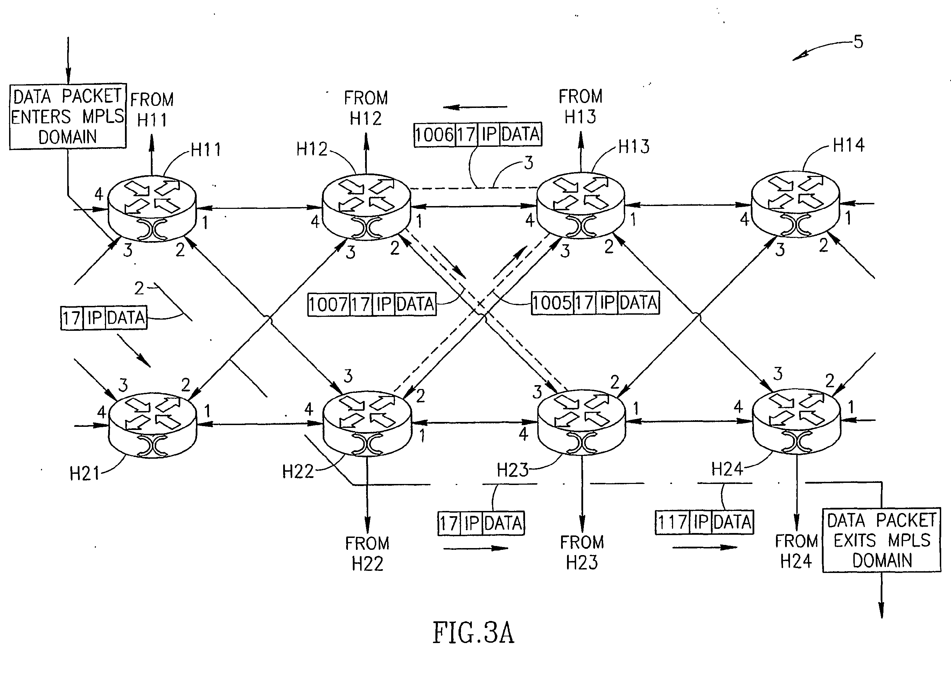

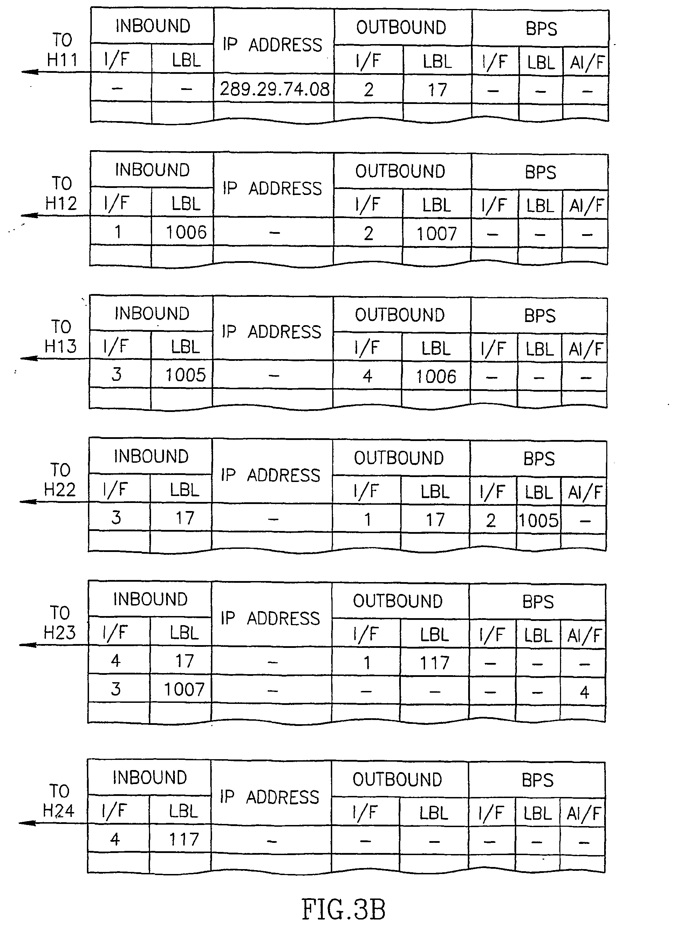

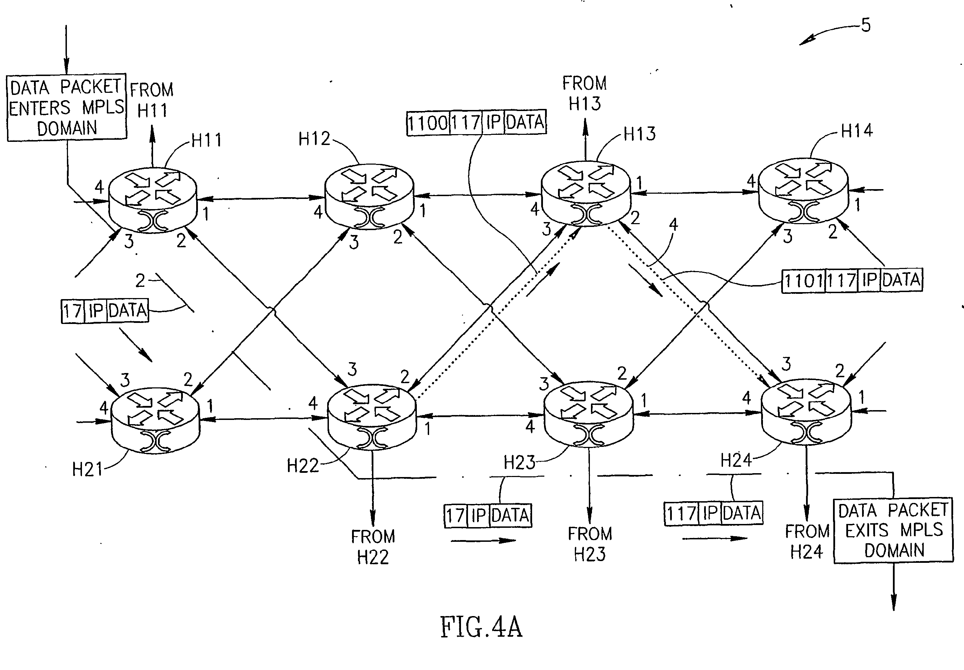

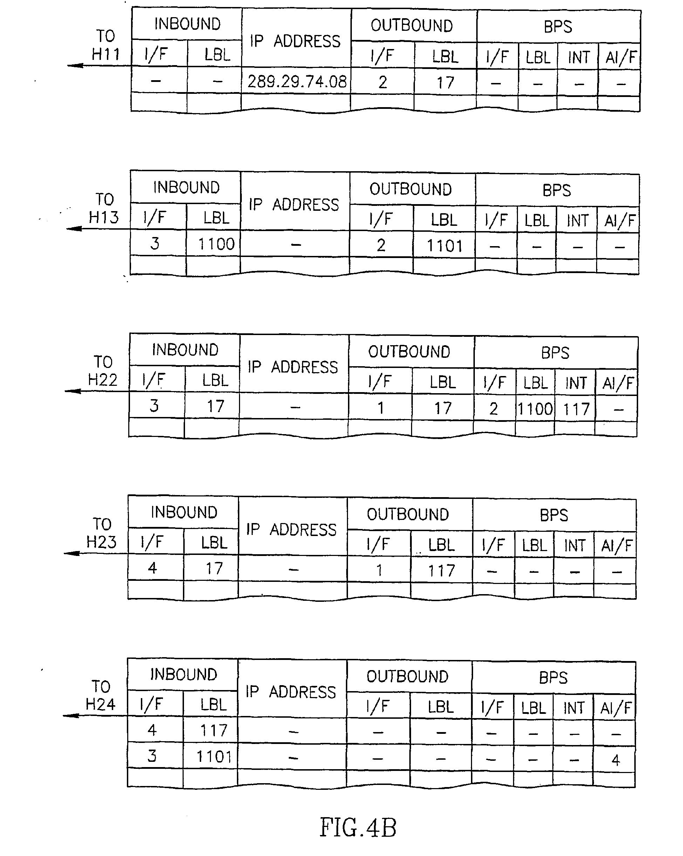

Figures 3A and 4A are respectively comparable to Figures 1A and 2A except that they show an MPLS domain 5 employing a local label scheme where each outbound label for forwarding a data packet along a link between a pair of neighboring network elements is specific for that link only and therefore the same numerical value of an outbound label will, in most likelihood, also be allocated on other links within the same MPLS domain. This is evidenced in the MPLS label employed for forwarding a data packet along LSP 2 from network element H22 to network element H23 has the same value as that employed from network element H11 to network element H22. As a consequence, each destination network element of a protected path segment necessarily requires additional information for associating a popped up MPLS label with its ostensibly originating network element, namely, its neighboring downstream network element. This is achieved in both cases of a protected link path segment (see Figure 3A) or a protected intermediate network element path segment (see Figure 4A) by way of an additional Associated Interface sub-column AI/F to the BPS column of a network element's LST. The additional information in the case of the MPLS domain 5 is evidenced by the value 4 in the AI/F sub-column of the rows of the network elements' LSTs acting as the destination network elements of the BPSs 3 and 4.

While the invention has been described with respect to a limited number of embodiments, it will be appreciated that many variations, modifications, and other applications of the invention can be made within the scope of the appended claims. For example, the present invention can be equally applied to other MPLS domain topologies including ring, mesh, and the like. Also, an LSP can have a combination of one or more protected link path segments and one or more protected intermediate network elements path segments. And, different BPSs can be established for the same protected path segment of different LSPs, if at all.

## Claims

1. A method for forwarding a data packet within a Multi-Protocol Label Switching domain comprising the steps of:
(a) establishing a label switched path between a pair of distinct endpoint network elements of a plurality of at least two network elements, the label switched path including one or more protected path segments each defined between a source network element (H22) and a destination network element (H23), each protected path segment being one of either a protected link path segment for protecting a link between neighboring source and destination network elements or a protected intermediate network element path segment for protecting an intermediate network element sandwiched between otherwise neighboring source and destination network elements; and
(b) establishing a backup path segment per protected path segment excluding any shared resource therewith except for its source and destination network elements,
the method being **characterized by** further comprising the steps of:
(c) pushing a Multi-Protocol Label Switching label onto a Multi-Protocol Label Switching stack of labels of the data packet at the source network element (H22) prior to forwarding the data packet along the backup path segment, the Multi-Protocol Label Switching label normally being employed for forwarding the data packet from the neighboring downstream network element to the destination network element along the protected path segment; and
(d) popping a last but one Multi-Protocol Label Switching label from the Multi-Protocol Label Switching stack of labels of the data packet at the destination network element (H23) for forwarding the data packet along the label switched path,
whereupon a data packet rerouted along the backup path segment proceeds along the original label switched path ostensibly as if the data packet had arrived at the destination network element from its neighboring downstream network element.

2. The method according to claim 1 wherein step (d) includes associating the popped Multi-Protocol Label Switching label with either the source network element in the case of a protected link path segment or the intermediate network element in the case of a protected intermediate network element path segment.

3. The method according to claim 1, wherein different Backup Path Segments are established for the same protected path segment of different Label Switched Paths.

4. A telecommunication network for forwarding a data packet within in a Multi-Protocol Label Switching domain, the telecommunication network comprising at least two network elements, and having a label switched path between a pair of distinct endpoint network elements of said at least two network elements, said label switched path including one or more protected path segments each defined between a source network element (H22) and a destination network element (H23), each protected path segment being one of either a protected link path segment for protecting a link between neighboring source and destination network elements or a protected intermediate network element path segment for protecting an intermediate network element sandwiched between otherwise neighboring source and destination network elements; and a backup path segment per protected path segment excluding any shared resource therewith except for its source and destination network elements,
the telecommunication network being **characterized in that** said source network element (H22) is adapted to push a Multi-Protocol Label Switching label onto a Multi-Protocol Label Switching stack of labels of the data packet prior to forwarding the data packet along said backup path segment, said Multi-Protocol Label Switching label normally being employed for forwarding the data packet from said neighboring downstream network element to said destination network element along said protected path segment; **and in that**
said destination network element (H23) is adapted to pop said last but one Multi-Protocol Label Switching label from said Multi-Protocol Label Switching stack of labels of the data packet for forwarding the data packet along said label switched path,
whereupon a data packet rerouted along the backup path segment proceeds along the original label switched path ostensibly as if the data packet had arrived at the destination network element from its neighboring downstream network element.

5. The network according to claim 4 wherein the popped Multi-Protocol Label Switching label is associated with either the source network element in the case of a protected link path segment or the intermediate network element in the case of a protected intermediate network element path segment.

6. The network according to claim 4, wherein different Backup Path Segments are established for the same protected path segment of different Label Switched Paths.

7. The network according to one or more of claims 4-6 for use in a telecommunication network.

8. A network element for use in a telecommunication network for forwarding a data packet within a Multi-Protocol Label Switching domain, the telecommunication network comprising at least three of said network elements, and having at least one label switched path, each of the label switched paths extending between a pair of distinct endpoint network elements of said at least three network elements, said label switched path including one or more protected path segments each defined between a source network element (H22) and a destination network element (H24), each protected path segment being a protected intermediate network element path segment for protecting at least one intermediate network element (H23) operatively located between said source and destination network elements, said source network element and said destination network element being two of said at least three network elements; and having at least one backup path segment per protected path segment associated with the at least one label switched path, excluding any shared resource with the protected path segment except for its source and destination network elements, **characterized in that** said source network element (H22) has means for pushing an additional Multi-Protocol Label Switching label onto a Multi-Protocol Label Switching stack of labels of the data packet at said source network element prior to forwarding the data packet along said at least one backup path segment, said source network element (H22) has means for switching said additional Multi Protocol Label Switching label associated with said data packet with a Multi-Protocol Label Switching normally being employed for forwarding the data packet to said destination network element from its neighboring intermediate network element along said protected path segment; and said destination network element (H24) having for popping a last but one additional Multi-Protocol Label Switching label from said Multi-Protocol Label Switching stack of labels of the data packet to reveal said switched Multi-Protocol Label Switching at said destination network element for forwarding the data packet along said label switched path,
whereupon a data packet rerouted along the backup path segment proceeds along the original label switched path ostensibly as if the data packet had arrived at the destination network element from its neighboring downstream network element.

9. The network element according to claim 8 wherein the popped Multi-Protocol Label Switching label is associated with the intermediate network element.

10. The network element according to claim 8, wherein different Backup Path Segments are established for the same protected path segment of different Label Switched Paths.

## Patentansprüche

1. Ein Verfahren zum Weiterleiten eines Datenpakets in einer Multi-Protocol Label Switching-Domäne, das folgende Schritte umfasst:
(a) Erstellung eines Label-vermittelten Pfads zwischen einem Paar von verschiedenen Endpunkt-Netzwerkelemente einer Vielzahl von mindestens zwei Netzwerkelenenten, wobei der Label-vermittelte Pfad ein oder mehrere geschützte Pfadsegmente einschließt, die jeweils zwischen einem Quell-Netzwerkelement (H22) und einem Ziel-Netzwerkelement (H23) bestimmt sind, wobei jedes geschützte Pfadsegment entweder ein geschütztes Vebindungs-Pfadsegment zum Schützen einer Verbindung zwischen benachbarten Quell- und Ziel-Netzwerkelementen ist oder ein geschütztes intermediäres Netzwerkelement-Pfadsegment zum Schützen eines intermediären Netzwerkelements ist, das zwischen ansonsten benachbarten Quell- und Ziel-Netzwerkelementen zwischengeordnet ist, und
(b) Erstellung eines Sicherungs-Pfadsegments pro geschütztem Pfadsegment, das jegliche damit geteilte Ressourcen außer seinen Quell- und Ziel-Netzwerkelementen ausschließt,
wobei das Verfahren **dadurch gekennzeichnet ist, dass** es weiter folgende Schritte umfasst:
(c) Legen eines Multi-Protocol Label Switching-Labels auf einen Multi-Protocol Label Switching-Stapel von Labeln des Datenpakets am Quell-Netzwerkelement (H22) vor Weiterleitung des Datenpakets entlang dem Sicherungs-Pfadsegment, wobei das Multi-Protocol Label Switching-Label normalerweise zum Weiterleiten des Datenpakets vom benachbarten stromabwärts gelegenen Netzwerkelement an das Ziel-Netzwerkelement entlang dem geschützten Pfadsegment verwendet wird, und
(d) Entfernen eines vorletzten Multi-Protocol Label Switching-Labels vom Multi-Protocol Label Switching-Stapel von Labeln des Datenpakets am Ziel-Netzwerkelement (H23) zum Weiterleiten des Datenpakets entlang dem Label-vermittelten Pfad, woraufhin ein Datenpaket, das entlang dem Sicherungs-Pfadsegment umgelenkt wird, seinen Weg entlang dem ursprünglichen Label-vermittelten Pfad fortsetzt, scheinbar als ob das Datenpaket am Ziel-Netzwerkelement von seinem benachbarten stromabwärts gelegenen Netzwerkelement angekommen wäre.

2. Das Verfahren gemäß Anspruch 1, worin Schritt (d) das Verknüpfen des entfernten Multi-Protocol Label Switching-Labels mit entweder dem Quell-Netzwerkelement im Fall eines geschützten Verbindungs-Pfadsegments oder dem intermediären Netzwerkelement im Fall eines geschützten intermediären Netzwerkelement-Pfadsegments einschließt.

3. Das Verfahren gemäß Anspruch 1, worin verschiedene Sicherungs-Pfadsegmente für dasselbe geschützte Pfadsegment von verschiedenen Label-vermittelter Pfade erstellt werden.

4. Ein Telekommunikationsnetzwerk zum Weiterleiten eines Datenpakets innerhalb einer Multi-Protocol Label Switching-Domäne, wobei das Telekommunikationsnetzwerk mindestens zwei Netzwerkelemente umfasst und einen Label-vermittelten Pfad zwischen einem Paar von verschiedenen Endpunkt-Netzwerkelemente der mindestens zwei Netzwerkelemente hat, wobei der Label-vormittelte Pfad ein oder mehrere geschützte Pfadsegmente einschießt, die jeweils zwischen einem Quell-Netzwerkelement (H22) und einem Ziel-Netzwerkelement (H23) bestimmt sind, wobei jedes geschützte Pfadsegment entweder ein geschütztes Verbindungs-Pfadsegment zum Schützen einer Vebindung zwischen benachbarten Quell- und Ziel-Netzwerkelementen ist oder ein geschütztes intermediäres Netzwerkelement-Pfadsegment zum Schützen eines intermediären Netzwerkelements ist, das zwischen ansonsten benachbarten Quell- und Ziel-Netzwerkelementen zwischengeordnet ist, und ein Sicherungs-Pfadsegment pro geschütztem Pfadsegment, das jegliche damit geteilte Ressourcen außer seinen Quell- und Ziel-Netzwerkelementen ausschließt,
wobei das Telekommunikationsnetzwerk **dadurch gekennzeichnet ist, dass** das Quell-Netzwerkelement (H22) ausgebildet ist, um ein Multi-Protocol Label Switching-Label auf einen Multi-Protocol Label Switching-Stapel von Labeln des Datenpakets zu legen, bevor das Datenpaket entlang dem Sicherungs-Pfadsegment weitergeleitet wird, wobei das Multi-Protocol Label Switching-Label normalerweise zum Weiterleiten des Datenpakets von dem benachbarten stromabwärts gelegenen Netzwerkelement an das Ziel-Netzwerkelement entlang dem geschützten Pfadsegment verwendet wird, und **dadurch**, dass
das Ziel-Netzwerkelement (H23) ausgebildet ist, um das vorletzte Multi-Protocol Label Switching-Label zum Weiterleiten des Datenpakets entlang dem Label-vermittelten Pfad von dem Multi-Protocol Label Switching-Stapel von Labeln des Datenpakets zu entfernen,
woraufhin ein Datenpaket, das entlang dem Sicherungs-Pfadsegment umgelenkt wird, seinen Weg entlang dem ursprünglichen Label-vermittelten Pfad fortsetzt, scheinbar als ob das Datenpaket am Ziel-Netzwerkelement von seinem benachbarten stromabwärts gelegenen Netzwerkelement angekommen wäre.

5. Das Netzwerk gemäß Anspruch 4, worin das entfernte Multi-Protocol Label Switching-Label entweder mit dem Quell-Netzwerkelement, im Falle eines geschützten Link-Pfadsegments, oder dem intermediären Netzwerkelement, im Falle eines geschützten intermediären Netzwerkelement-Pfadsegments, verknüpft ist.

6. Das Netzwerk gemäß Anspruch 4, worin verschiedene Sicherungs-Pfadsegmente für dasselbe geschützte Pfadsegment verschiedener Label-vermittelter Pfade erzeugt werden.

7. Das Netzwerk gemäß einem oder mehreren der Ansprüche 4-6 zur Verwendung in einem Telekommunikationsnetzwerk.

8. Ein Netzwerkelement zur Verwendung in einem Telekommunikationsnetzwerk zur Weiterleitung eines Datenpakets innerhalb einer Multi-Protocol Label Switching-Domäne, wobei das Telekommunikationsnetzwerk mindestens drei der Netzwerkelemente umfasst und mindestens einen Label-vermittelten Pfad hat, wobei jeder der Label-vermittelten Pfade sich zwischen einem Paar von verschiedenen Endpunkt-Netzwerkelemente der mindestens drei Netzwerkelemente erstreckt und wobei der Label-vermittelte Pfad ein oder mehrere geschützte Pfadsegmente einschließt, die jeweils zwischen einem Quell-Netzwerkelement (H22) und einem Ziel-Netzwerkelement (H24) bestimmt sind, wobei jedes geschützte Pfadsegment ein geschütztes intermediäres Netzwerkelement-Pfadsegment zum Schutz mindestens eines intermediären Netzwerkelements (H23) ist, das operativ zwischen dem Quell- und dem Ziel-Netzwerkelement angeordnet ist, wobei das Quell-Netzwerkelement und das Ziel-Netzwerkelement zwei der mindestens drei Netzwerkelemente sind; und mit mindestens einem Sicherungs-Pfadsegment pro geschütztem Pfadsegment, das mit dem mindestens einen Label-vermittelten Pfad verknüpft ist, das jegliche geteile Ressourcen mit dem geschützten Pfadsegment außer seinen Quell- und Ziel-Netzwerkelementen ausschließt, **dadurch gekennzeichnet, dass** das Quell-Netzwerkelement (H22) Mittel hat, um ein zusätzliches Multi-Protocol Label Switching-Label auf einen Multi-Protocol Label Switching-Stapel von Labeln des Datenpakets an dem Quell-Netzwerkelement zu legen, bevor das Datenpaket entlang dem mindestens einen Sicherungs-Pfadsegment weitergeleitet wird; wobei das Quell-Netzwerkelement (H22) Mittel zur Vermittlung des zusätzlichen Multi Protocol Label Switching-Labels, das mit dem Datenpaket verknüpft ist, mit einem Multi-Protocol Label Switching hat, das normalerweise verwendet wird, um das Datenpaket von seinem benachbarten intermediären Netzwerkkelement an das Ziel-Netzwerkelement entlang dem geschützten Pfadsegment weiterzuleiten, und wobei das Ziel-Netzwerkelement (H24) Mittel hat, um ein vorletztes zusätzlinhes Multi-Protocol Label Switching-Label von dem Multi-Protocol Label Switching-Stapel von Labeln des Datenpakets zu entfernen, um das vermittelte Multi-Protocol Label Switching an dem Ziel-Netzwerkelement zur Weiterleitung des Datenpakets entlang dem Label-vermittelten Pfad zu zeigen,
woraufhin ein Datenpaket, das entlang dem Sicherungs-Pfadsegment umgelenkt wird, seinen Weg entlang dem ursprünglichen Label-vermittelten Pfad scheinbar so fortsetzt, als ob das Datenpaket am Ziel-Netzwerkelement von seinem benachbarten stromabwärts gelegenen Netzwerkelement gekommen wäre.

9. Das Netzwerkelement gemäß Anspruch 8, worin das entfernte Multi-Protocol Label Switching-Label mit dem intermediären Netzwerkelement verknüpft ist.

10. Das Netzwerkelement gemäß Anspruch 8, worin verschiedene Sicherungs-Pfadsegmente für dasselbe geschützte Pfadsegment verschiedener Label-vermittelter Pfade erzeugt werden.

## Revendications

1. Procédé pour retransmettre un paquet de données dans un domaine de commutation multi-protocole par étiquette, comprenant les étapes consistant à :
(a) établir un chemin à commutation par étiquette entre une paire d'éléments de réseau d'extrémité distincts d'une pluralité d'au moins deux éléments de réseau, le chemin à commutation par étiquette comprenant un ou plusieurs éléments de chemin protégés, chacun défini entre un élément de réseau de source (H22) et un élément de réseau de destination (H23), chaque segment de chemin protégé étant un segment de chemin protégé de liaison pour protéger une liaison entre des éléments de réseau voisins de source et de destination ou un segment de chemin protégé d'élément de réseau intermédiaire pour protéger un élément de réseau intermédiaire pris en sandwich entre des éléments de réseau de source et de destination autrement voisins ; et
(b) établir un segment de chemin de sauvegarde par segment de chemin protégé excluant toute ressource partagée avec celui-ci sauf pour ses éléments de réseau de source et de destination,
le procédé étant **caractérisé en ce qu'**il comprend en outre les étapes consistant à :
(c) pousser une étiquette de commutation multi-protocole par étiquette sur une pile d'étiquettes de commutation multi-protecole par étiquette du paquet de données au niveau de l'élément de réseau de source (H22) avant de retransmettre le paquet de données suivant le segment de chemin de sauvegarde, l'étiquette de commutation multi-protocole par étiquette étant normalement utilisée pour retransmettre le paquet de données de l'élément de réseau voisin en aval à l'élément de réseau de destination suivant le segment de chemin protégé ; et
(d) prendre une avant-dernière étiquette de commutation multi-protocole par étiquette de la pile d'étiquettes de commutation multi-protocole par étiquette du paquet de données au niveau de l'élément de réseau de destination (H23) pour retransmettre le paquet de données suivant le chemin à commutation par étiquette,
après quoi un paquet de données réacheminé suivant le segment de chemin de sauvegarde procède suivant le chemin à commutation par étiquette d'origine prétendument comme si le paquet de données était arrivé à l'élément de réseau de destination en provenance de son élément de réseau voisin en aval.

2. Procédé selon la revendication 1, dans lequel l'étape (d) comprend l'association de l'étiquette de commutation multi-protocole par étiquette prise avec l'élément de réseau de source dans le cas d'un segment de chemin protégé de liaison ou l'élément de réseau intermédiaire dans le cas d'un segment de chemin protégé d'élément de réseau intermédiaire.

3. Procédé selon la revendication 1, dans lequel des segments de chemin de sauvegarde différents sont établis pour le même segment de chemin protégé de différents chemins à commutation par étiquette.

4. Réseau de télécommunication pour retransmettre un paquet de données dans un domaine de commutation multi-protocole par étiquette, le réseau de télécommunication comprenant au moins deux éléments de réseau et comportant un chemin à commutation par étiquette entre une paire d'éléments de réseau d'extrémité distincts desdits au moins deux éléments de réseau, ledit chemin à commutation par étiquette comprenant un ou plusieurs éléments de chemin protégés, chacun défini entre un élément de réseau de source (H22) et un élément de réseau de destination (H23), chaque segment de chemin protégé étant un segment de chemin protégé de liaison pour protéger une liaison entre des éléments de réseau voisins de source et de destination ou un segment de chemin protégé d'élément de réseau intermédiaire pour protéger un élément de réseau intermédiaire pris en sandwich entre des éléments de réseau de source et de destination autrement voisins ; et un segment de chemin de sauvegarde par segment de chemin protégé excluant toute ressource partagée avec celui-ci sauf pour ses éléments de réseau de source et de destination,
le réseau de télécommunication étant **caractérisé en ce que** ledit élément de réseau de source (H22) est adapté pour pousser une étiquette de commutation multi-protocole par étiquette sur une pile d'étiquettes de commutation multi-protocole par étiquette du paquet de données avant de retransmettre le paquet de données suivant ledit segment de chemin de sauvegarde, ladite étiquette de commutation multi-protocole par étiquette étant normalement utilisée pour retransmettre le paquet de données dudit élément de réseau voisin en aval audit élément de réseau de destination suivant ledit segment de chemin protégé ; et **en ce que**
ledit élément de réseau de destination (H23) est adapté pour prendre ladite avant-dernière étiquette de commutation multi-protocole par étiquette de ladite pile d'étiquettes de commutation multi-protocole par étiquette du paquet de données pour retransmettre le paquet de données suivant ledit chemin à commutation par étiquette,
après quoi un paquet de données réacheminé suivant le segment de chemin de sauvegarde procède suivant le chemin à commutation par étiquette d'origine prétendument comme si le paquet de données était arrivé à l'élément de réseau de destination en provenance de son élément de réseau voisin en aval.

5. Réseau selon la revendication 4, dans lequel l'étiquette de commutation multi-protocole par étiquette prise est associée avec l'élément de réseau de source dans le cas d'un segment de chemin protégé de liaison ou l'élément de réseau intermédiaire dans le cas d'un segment de chemin protégé d'élément de réseau intermédiaire.

6. Réseau selon la revendication 4, dans lequel des segments de chemin de sauvegarde différents sont établis pour le même segment de chemin protégé de différents chemins à commutation par étiquette.

7. Réseau selon une ou plusieurs des revendications 4 à 6 pour l'utilisation dans un réseau de télécommunication.

8. Elément de réseau pour l'utilisation dans un réseau de télécommunication pour retransmettre un paquet de données dans un domaine de commutation multi-protocole par étiquette, le réseau de télécommunication comprenant au moins trois desdits éléments de réseau et comportant au moins un chemin à commutation par étiquette, chacun des chemins à commutation par étiquette s'étendant entre une paire d'éléments de
réseau d'extrémité distincts desdits au moins trois éléments de réseau, ledit chemin à commutation par étiquette comprenant un ou plusieurs segments de chemin protégés, chacun défini entre un élément de réseau de source (H22) et un élément de réseau de destination (H24), chaque segment de chemin protégé étant un segment de chemin d'élément de réseau intermédiaire protégé pour protéger au moins un élément de réseau intermédiaire (H23) situé fonctionnellement entre lesdits éléments de réseau de source et de destination, ledit élément de réseau de source et ledit élément de réseau de destination étant deux desdits au moins trois éléments de réseau ; et comportant au moins un segment de chemin de sauvegarde par segment de chemin protégé associé avec l'au moins un chemin à commutation par étiquette, excluant toute ressource partagée avec le segment de chemin protégé sauf pour ses éléments de réseau de source et de destination, **caractérisé en ce que** ledit élément de réseau de source (H22) comporte des moyens pour pousser une étiquette additionnelle de commutation multi-protocole par étiquette sur une pile d'étiquettes de commutation multi-protocole par étiquette du paquet de données dudit élément de réseau de source avant de retransmettre le paquet de données suivant ledit au moins un segment de chemin de sauvegarde, ledit élément de réseau de source (H22) comporte des moyens pour commuter ladite étiquette de commutation multi-protocole par étiquette additionnelle associée audit paquet de données avec une commutation multi-protocole par étiquette qui est normalement utilisée pour retransmettre le paquet de données audit élément de réseau de destination à partir de son élément de réseau intermédiaire voisin suivant ledit segment de chemin protégé ; et ledit élément de réseau de destination (H24) comportant des moyens pour prendre une avant-dernière étiquette additionnelle de commutation multi-protoeole par étiquette de ladite pile d'étiquettes de commutation multi-protocole par étiquette du paquet de données pour révéler laite commutation multi-protocole par étiquette commutée au niveau dudit élément de réseau de destination pour retransmettre le paquet de données suivant ledit chemin à commutation par étiquette,
après quoi un paquet de données réacheminé suivant le segment de chemin de sauvegarde procède suivant le chemin à commutation par étiquette d'origine prétendument comme si le paquet de données était arrivé à l'élément de réseau de destination, en provenance de son élément de réseau voisin en aval.

9. Elément de réseau selon la revendication 8, dans lequel l'étiquette de commutation multi-protocole par étiquette prise est associée à l'élément de réseau intermédiaire.

10. Elément de réseau selon la revendication 8, dans lequel des segments de chemin de sauvegarde différents sont établis pour le même segment de chemin protégé de différents chemins à commutation par étiquette.
